# EUROPEAN PATENT SPECIFICATION

(11) **EP 1 872 071 B1**
(45) Date of publication and mention of the grant of the patent: **09.07.2008**
(21) Application number: 06727952.1
(22) Date of filing: 17.04.2006
(51) Int. Cl.: F25D 23/12

(54) **A REFRIGERATOR**
KÜHLVORRICHTUNG
REFRIGERATEUR

(30) Priority: 18.04.2005 TR 200501391
(43) Date of publication of application: 02.01.2008
(73) Proprietor: Arçelik Anonim Sirketi, 34950 Istanbul (TR)
(72) Inventor: SUNER, Gorkem, Arcelik Anonim Sirketi, 34950 Istanbul (TR)
(86) International application number: PCT/IB2006/051184
(87) International publication number: WO 2006/111918

(56) References cited:
- US-A- 6 039 219

## Description

The present invention relates to a refrigerator having a mechanism for extracting the juices of vegetables or fruits.

The refrigerators comprise a body wherein food like vegetables, fruit or beverages are stored and a door for closing the body. Small household appliances like the juicers are utilized to extract the juices of vegetables, fruits stored in the refrigerator, for example the citrus fruits like oranges and lemons. Increase in the number of different small household appliances used for different purposes create the problem of storage space in kitchens where they are used. A refrigerator with a liquid dispenser is known from patent member US6039219.

The aim of the present invention is to design a refrigerator comprising a mechanism with which the juices of vegetables and fruits stored therein can be extracted and these extracted juices can be cooled if desired.

The refrigerator designed to fulfill the objective of the present invention is illustrated in the attached figures, where:

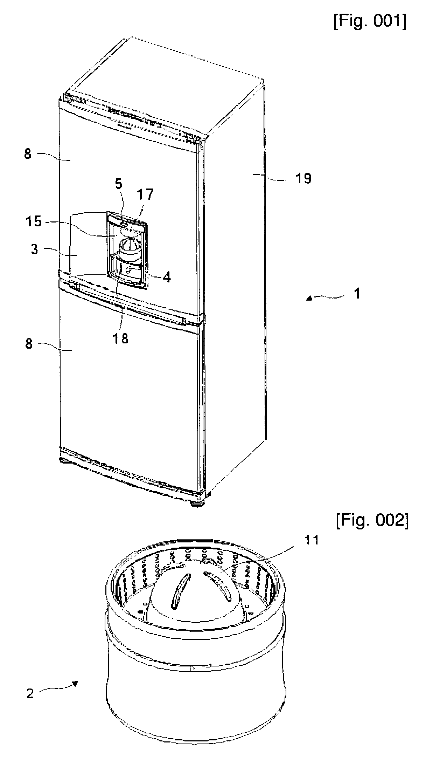

Figure 1 - is the perspective view of a refrigerator that has a juicer on a door.

Figure 2 - is the perspective view of a juicer.

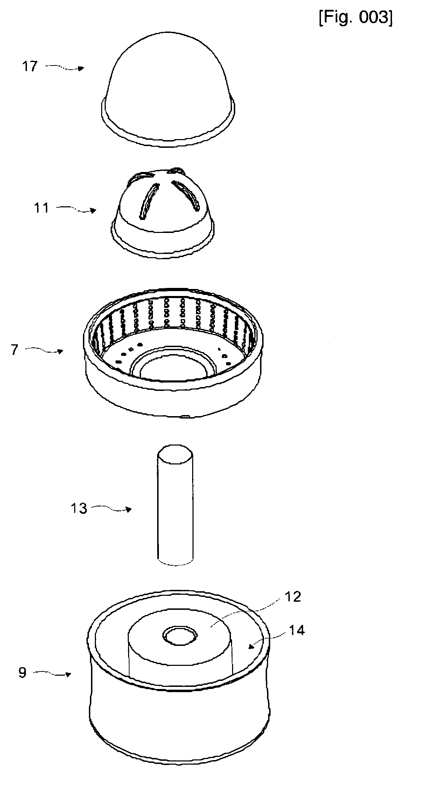

Figure 3 - is the exploded view of a juicer.

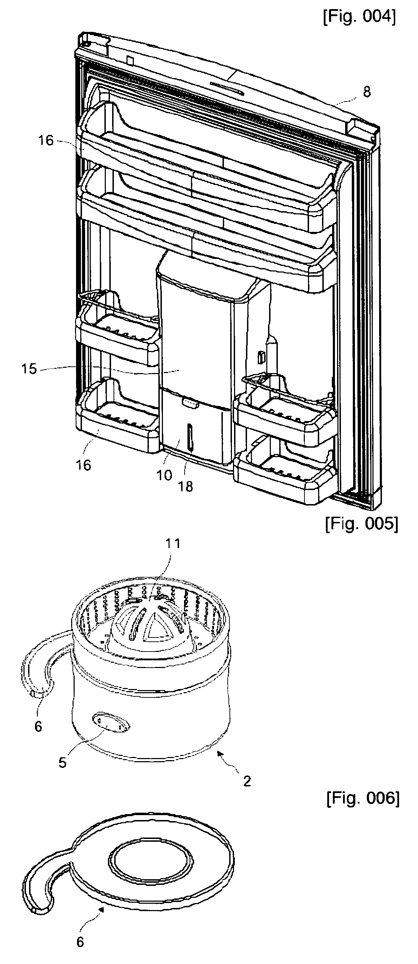

Figure 4 - is the rear perspective view of a door that comprises a compartment having a juicer situated inside.

Figure 5 - is the perspective view of a juicer having a discharge apparatus.

Figure 6 - is the perspective view of a discharge apparatus.

Elements shown in figures are numbered as follows:
1. Refrigerator
2. Juicer
3. Lid
4. Faucet
5. Button
6. Discharge apparatus
7. Sieve
8. Door
9. Body
10. Storage unit
11. Headpiece
12. Motor
13. Shaft
14. Channel
15. Compartment
16. Shelf
17. Compressing element
18. Indicator
19. Cabin

The refrigerator (1) of the present invention comprises a cabin (19) inside which food and beverages are stored, one or more doors (8) that provide access into the cabin (19), one or more shelves (16) inside the cabin (19) and/or the door (8) on which food and beverages are stored, a juicer (2) which is integrated on the outer surface of the door (8) and/or the cabin (19), providing the squeezing of vegetables and fruits, for example tomatoes, oranges etc. from outside the door (8) and/or the cabin (19), preferably without opening the door (8), collecting the extracted juices inside the door (8) and/or the cabin (19) to be cooled, transferring the collected juices to containers if desired, and a compartment (15) inside which the juicer (2) is positioned.

The juicer (2) comprises a headpiece (11) that compresses the fruit and vegetables placed on it to extract their juices, a sieve (7) that separates the residue from the juices extracted by the headpiece (11), a motor (12) that activates the headpiece (11) situated on it, a body (9) inside which the headpiece(11), the sieve (7) the motor (12) and similar components are contained and a shaft (13) attached on the headpiece (11) that transfers the drive received from the motor (12) to the headpiece (11).

The headpiece (11) comprises one or more protrusions and/or recesses that enhance to drain the juices of fruit and vegetables placed on it.

When the juicer (2) of the present invention is being used, the user places the vegetables and the fruits, preferably cutting the fruits, on the headpiece (11), which the motor (12) actuates. The fruit is being compressed via pressing by hand on the headpiece (11) and the fruit juice is extracted by being strained through the sieve (7). After usage, the user can take out the headpiece (11), the sieve (7), the shaft (13) and other components if desired, and assemble them back on after washing and cleaning.

In the preferred embodiment of the present invention, the refrigerator (1) comprises a removable storage unit (10) wherein the vegetable or the fruit juices from the juicer (2) are collected and stored, which does not contact the outer surface of the door (8) and/or the cabin(19) and is situated within the door (8) and/or the cabin(19) so that it can be cooled.

In one embodiment of the present invention, the refrigerator (1) comprises a lid (3) that serves to hide the juicer (2).

In another embodiment of the present invention, the refrigerator (1) comprises a faucet (4) that provides the juices collected or stored in the storage unit (10) to be poured for consumption into other containers from the storage unit (10).

In another embodiment of the present invention, the refrigerator (1) comprises an indicator (18) that shows the amount of juice in the storage unit (10). In this embodiment, the indicator (18) is formed with the transparent construction of the storage unit (10), in the part of the juicer (2) where there is no problem of insulation, and in the parts of the juicer (2) that are in contact with the outside of the refrigerator (1) where there is an insulation problem, mechanical and electronic elements, for example water gauges, sensors or electronic cards are used to indicate to the user the amount of extracted juices in the storage unit (10).

In another embodiment of the present invention, the juicer (2) comprises one or more compressing elements (17) situated on the headpiece (11) that provide the vegetables and fruit to be mashed by being compressed with mechanical and/or electronic elements such as motors, sensors etc. manually or automatically.

In yet another embodiment of the present invention, the juicer (2) comprises a channel (14) situated in the body (9), providing the juices that can pass through the sieve (7) to be collected and guided into the storage unit (10).

When the juicer (2) of the present invention is being used, the user places the vegetables and fruit, preferably precutting the fruit, on the headpiece (11). As the precut fruit is pressed on the headpiece (11) manually or by the help of the compressing element (11), the fruit is being squeezed and the fruit juice flows towards the sieve (7). The fruit juice separated from its residue with the help of the sieve (7) is transferred to the storage unit (10) by way of the channel (14). In this manner the fruit juice that will not be used immediately can be cooled. If the user wants to get fruit juice from the storage unit (10), the faucet (4) is used and the desired amount of fruit juice can be taken out of the storage unit (10). After usage, the user, if desired, can take out the compressing element (17), the headpiece (11), the sieve (7), the shaft (13), the body (9) and the storage unit (10) and mount them back on after washing and cleaning.

In the preferred embodiment of the present invention, the juicer (2) is situated on the door (8). In this manner, it takes up less space within the cooling device (1) and the insulation problems are minimized as much as possible.

In one embodiment of the present invention, the juicer (2) comprises one or more buttons (5) that actuate the motor (12). When the button (5) is brought to the on position, the motor (12) starts operating continuously and when the button (5) is brought to the off position, the motor (12) stops.

In another embodiment of the present invention the juicer (2) comprises a discharge apparatus (6) situated under the sieve (7) that provides to deliver the juices of fruit and vegetables extracted by the user to the outside of the door (8) without being transferred to the storage unit (10) by way of the channel (14). When the user uses the discharge apparatus (6), the headpiece (11) and the sieve (7) are dismounted and the discharge apparatus (6) is positioned between the channel (14) and the sieve (7), after the headpiece (11) and the sieve (7) are mounted in place again, a container, for example a glass is placed at the end of the discharge apparatus (6) to collect the extracted juices.

In another embodiment, the storage unit (10) is cooled by the cold air that is cooled by contacting with the evaporator, through which the refrigerant fluid circulates, and guided by way of the channels in the cooling device (1).

In another embodiment the storage unit (10) is cooled by the cold air that is moved by, preferably a fan.

Fruit and vegetable juices can easily be extracted with the juicer (2) that is integrated on the cooling device (1) of the present invention, without the need for extra gadgets or devices, and be cooled if desired. Furthermore, the juicer (2) being hidden by the lid (3) does not alter the esthetic appearance of the refrigerator (1) and is kept out of involuntary reach of children.

## Claims

1. A refrigerator (1) comprising a cabin (19) inside which food and beverages are stored and one or more doors (8) that provide access into the cabin (19), **characterized by** a juicer (2) which is integrated on the outer surface of the door (8) and/or the cabin (19) said juicer providing the squeezing of vegetables and fruits such as tomatoes, oranges and similar from outside the door (8) and/or the cabin (19) said juicer collecting the extracted juices to be cooled, inside the door (8) and/or the cabin (19), and if desired transferring the collected juices to containers.

2. A refrigerator (1) according to Claim 1, **characterized by** a removable storage unit (10) wherein the vegetable or the fruit juice from the juicer (2) are collected and stored, said storage mit being situated within the door (8) and/or the cabin (19) so that it can be cooled.

3. A refrigerator (1) according to Claim 1 or 2, **characterized by** a compartment (15) inside which the juicer (2) is situated.

4. A refrigerator (1) according to any one of the Claims 1 to 3, **characterized by** a lid (3) which serves to hide the juicer (2).

5. A refrigerator (1) according to Claim 2, **characterized by** a faucet (4) that provides the juices collected and stored in the storage unit (10) to be transferred into containers outside the storage unit (10) for consumption.

6. A refrigerator (1) according to Claim 2, **characterized by** an indicator (18) that shows the amount of juice in the storage unit (10).

7. A refrigerator (1) according to any one of the above claims, **characterized by** said juicer (2) comprising a headpiece (11) that compresses the fruit and vegetables placed on it to extract their juices, a sieve (7) that separates the residue from the juices extracted by the headpiece (11), a motor (12) that activates the headpiece (11) situated on it, a body (9) inside which the headpiece(11), the sieve (7) the motor (12) and similar components are contained and a shaft (13) on which the headpiece (11) is attached, said shaft transferring the drive received from the motor (12) to the headpiece (11).

8. A refrigerator (1) according to Claim 7, **characterized by** said juicer (2) comprising one or more compressing elements (17) situated on the headpiece (11) that provide the vegetables and fruit to be mashed by being compressed.

9. A refrigerator (1) according to Claim 7 and 8, **characterized by** said juicer (2) comprising a channel (14) situated in the body (9), providing the juices that can pass through the sieve (7) to be collected and guided into the storage unit (10).

10. A refrigerator (1) according to Claim 7 to 9, **characterized by** said juicer (2) comprising one or more buttons (5) that provide for activating the motor (12).

11. A refrigerator (1) according to Claim 7, **characterized by** said juicer (2) comprising a discharge apparatus (6) situated under the sieve (7) that provides to deliver the juices of fruit and vegetables extracted by the user to the outside of the door (8), for immediate consumption, without being transferred to the storage unit (10).

## Patentansprüche

1. Kühlschrank (1), umfassend: eine Kabine (19) im Inneren, in der Lebensmittel und Getränke aufbewahrt werden, und eine oder mehrere Türen (8), die Zugang zur Kabine (19) bieten, **gekennzeichnet durch** einen Entsafter (2), der in die Außenfläche der Tür (8) und/oder der Kabine (19) eingebaut ist, wobei der Entsafter (2) das Auspressen von Gemüse und Obst, z.B. von Tomaten, Orangen u.ä. von außerhalb der Tür (8) und/oder der Kabine (19) vorsieht, wobei die extrahierten, zu kühlenden Säfte im Inneren der Tür (8) und/oder der Kabine (19) gesammelt werden, und wobei die gesammelten Säfte bei Bedarf an Saftbehälter weitergeleitet werden.

2. Kühlschrank (1) nach Anspruch 1, **gekennzeichnet durch** eine entnehmbare Aufbewahrungseinheit (10), in der der Gemüse- oder Obstsaft von dem Entsafter (2) gesammelt und aufbewahrt wird, wobei die Aufbewahrungseinheit in der Tür (8) und/oder der Kabine (19) angeordnet ist, derart, dass die Aufbewahrungseinheit gekühlt werden kann.

3. Kühlschrank (1) nach Anspruch 1 oder 2, **gekennzeichnet durch** ein Fach (15), in dem, in dem der Entsafter (2) angeordnet ist.

4. Kühlschrank (1) nach einem der Ansprüche 1 bis 3, **gekennzeichnet durch** einen Deckel (3), der dazu dient, den Entsafter (2) zu verbergen.

5. Kühlschrank (1) nach Anspruch 2, **gekennzeichnet durch** einen Hahn (4), der die Säfte, die in der Aufbewahrungseinheit (10) gesammelt und aufbewahrt werden, bereitstellt, damit sie an Behälter außerhalb der Aufbewahrungseinheit (10) weitergeleitet werden, um konsumiert zu werden.

6. Kühlschrank (1) nach Anspruch 2, **gekennzeichnet durch** einen Indikator (18), der die Menge an Saft in der Aufbewahrungseinheit (10) anzeigt.

7. Kühlschrank (1) nach einem der vorangehenden Ansprüche, **dadurch gekennzeichnet, dass** der Entsafter (2) ein Kopfstück (11) umfasst, das das Obst und Gemüse, das darauf angeordnet wird, komprimiert, um den Saft daraus zu extrahieren, ein Sieb (7), das den Rest von den Säften trennt, die von dem Kopfstück (11) extrahiert wurden, einen Motor (12), der das Kopfstück (11) aktiviert, das daran angeordnet ist, einen Körper (9), in dem das Kopfstück (11), das Sieb (7), der Motor (12) und ähnliche Bauteile aufgenommen sind, und eine Welle (13), an der das Kopfstück (11) befestigt ist, wobei die Welle den Antrieb vom Motor (12) an das Kopfstück (11) überträgt.

8. Kühlschrank (1) nach Anspruch 7, **dadurch gekennzeichnet, dass** der Entsafter (2) ein oder mehrere Kompressionselemente (17) umfasst, die an dem Kopfstück (11) angeordnet sind, und die vorsehen, dass das Gemüse und Obst durch Komprimieren zerquetscht werden.

9. Kühlschrank (1) nach Anspruch 7 oder 8, **dadurch gekennzeichnet, dass** der Entsafter (2) einen Durchlass (14) umfasst, der im Körper (9) angeordnet ist, und der vorsieht, dass die Säfte, die durch das Sieb (7) gelangen können, gesammelt und der Aufbewahrungseinheit (10) zugeführt werden können.

10. Kühlschrank (1) nach den Ansprüchen 7 bis 9, **dadurch gekennzeichnet, dass** der Entsafter (2) einen oder mehrere Knöpfe (5) umfasst, die ein Aktivieren des Motors (12) vorsehen.

11. Kühlschrank (1) nach Anspruch 7, **dadurch gekennzeichnet, dass** der Entsafter (2) eine Abgabevorrichtung (6) umfasst, die unter dem Sieb (7) angeordnet ist, und die vorsieht, dass die extrahierten Säfte von Obst und Gemüse von dem Benutzer an den Außenbereich der Tür (8) bereitgestellt werden, um sofort konsumiert zu werden, ohne an die Aufbewahrungseinheit (10) weitergeleitet zu werden.

## Revendications

1. Un réfrigérateur (1) comprenant une cabine (19) dans laquelle les nourritures et boissons sont stockées, et une ou plusieurs portes (8) assurant l'accès dans la cabine (19), **caractérisé par** une machine à jus (2) intégrée sur la surface extérieure de la porte (8) et/ou de la cabine (19), ladite machine à jus permettant de presser les légumes et fruits comme les tomates, oranges etc. à l'extérieur de la porte (8) et/ou de la cabine (19), de collecter le jus extrait à refroidir dans la porte (8) et/ou la cabine (19), et de transmettre, si l'on souhaiterait, le jus collecté aux conteneurs.

2. Un réfrigérateur (1) selon la revendication 1, **caractérisé par** une unité de stockage amovible (10) dans laquelle le jus de légumes ou de fruits venant de la machine à jus (2) est collecté et stocké, laquelle unité étant située dans la porte (8) et/ou la cabine (19) pour ainsi permettre le refroidissement de ce qu'elle contient.

3. Un réfrigérateur (1) selon la revendication 1 ou 2, **caractérisé par** une compartiment (15) dedans où la machine à jus (2) est placée.

4. Un réfrigérateur (1) selon l'une des revendications de 1 à 3, **caractérisé par** un couvercle (3) qui sert à cacher la machine à jus (2).

5. Un réfrigérateur (1) selon la revendication 2, **caractérisé par** un robinet (4) permettant la transmission des jus collectés et stockés dans l'unité de stockage (10) dans les conteneurs situés à l'extérieur de l'unité de stockage (10) pour leur consommation.

6. Un réfrigérateur (1) selon la revendication 2, **caractérisé par** un indicateur (18) qui montre la quantité du jus dans l'unité de stockage (10).

7. Un réfrigérateur (1) selon l'une des revendications en haut, **caractérisé par** ladite machine à jus (2) comprenant une pièce principale (11) qui presse les fruits et légumes placés dedans pour en sortir le jus, un tamis (7) qui sépare le résidu au jus extrait par la pièce principale (11), un moteur (12) qui met en marche la pièce principale (11) placée dessus, un corps (9) à l'intérieur duquel la pièce principale (11), le tamis (7), le moteur (12) et les components similaires sont contenus et un arbre de transmission (13) sur lequel la pièce principale (11) est attachée, ledit arbre de transmission transmettant le tour venant du moteur (12) à la pièce principale (11).

8. Un réfrigérateur (1) selon la revendication 7, **caractérisé par** ladite machine à jus (2) comprenant un ou plusieurs éléments (17) situés sur la pièce principale (11) qui assure l'écrasement des légumes et fruits par la pression.

9. Un réfrigérateur (1) selon les revendications 7 et 8, **caractérisé par** ladite machine à jus (2) comprenant un canal (14) situé dans le corps (9), permettant au jus qui pourrait passer du tamis (7) d'être collecté et guidé dans l'unité de stockage (10).

10. Un réfrigérateur (1) selon les revendications de 7 à 9, **caractérisé par** ladite machine à jus (2) comprenant un ou plusieurs boutons (5) utilisés pour la mise en marche du moteur (12).

11. Un réfrigérateur (1) selon la revendication 7, **caractérisé par** ladite machine à jus (2) comprenant un appareil (6) situé sous le tamis (7) qui assure la transmission du jus de légumes et fruits extrait par l'utilisateur à l'extérieur de la porte (8) pour sa consommation immédiate sans qu'il soit transmis à l'unité de stockage (10).
